## Europäisches Patentamt
## European Patent Office
## Office européen des brevets

(11) Numéro de publication: **0 014 489**
**B1**

(12)
# FASCICULE DE BREVET EUROPEEN

(45) Date de publication du fascicule du brevet: **31.08.83**

(51) Int. Cl.³: **B 29 C 27/02, F 16 L 27/02**

(21) Numéro de dépôt: **80200031.5**

(22) Date de dépôt: **14.01.80**

(54) **Procédé pour la réalisation de canalisations en matière thermoplastique.**

(30) Priorité: **22.01.79 FR 7901863**

(43) Date de publication de la demande:
**20.08.80 Bulletin 80/17**

(45) Mention de la délivrance du brevet:
**31.08.83 Bulletin 83/35**

(84) Etats contractants désignés:
**AT BE CH DE FR GB IT LU NL SE**

(56) Documents cités:
**FR - A - 2 179 154**
**FR - A - 2 189 677**
**GB - A - 1 376 731**
**GB - A - 1 383 527**
**US - A - 3 096 105**
**US - A - 3 698 746**

(73) Titulaire: **SOLVAY & Cie (Société Anonyme)**
**Rue du Prince Albert, 33**
**B-1050 Bruxelles (BE)**

(72) Inventeur: **Detry, Daniel**
**Rue du Baillois, 59**
**B-1330 Rixensart (BE)**

Courier Press, Leamington Spa, England.

Procédé pour la réalisation de canalisations en matière thermoplastique

La présente invention concerne un procédé pour la réalisation de canalisations en matière thermoplastique par soudage bout à bout de sections de tuyau.

Pour le transport de fluides, et en particulier de fluides corrosifs vis-à-vis des métaux, il est souvent fait appel à des canalisations réalisées en matière thermoplastique. De telles canalisations sont en général réalisées par assemblage bout à bout de sections extrudées à partir de matières thermoplastiques telles que les résines vinyliques, les résines polyoléfiniques, ou encore les résines à base de nitrile acrylique.

Un procédé particulièrement économique pour réaliser des canalisations de ce type consiste à assembler les sections successives par soudage direct bout à bout en faisant par exemple appel à la technique de soudage par miroir chauffant.

On a toutefois constaté que les canalisations réalisées par ce procédé présentent un défaut majeur qui découle en fait du mode de production des sections. Ces sections sont en effet généralement produites par la technique d'extrusion. Il en résulte que les macromolécules de leur matériau constitutif ont tendance à être orientées préférentiellement dans une direction parallèle à l'axe longitudinal des sections. En conséquence, lorsque, pour une raison quelconque, une fissure locale se produit dans la paroi de la canalisation, cette fissure a tendance à se propager longitudinalement sur toute la longueur de la canalisation et pas seulement sur la longueur d'une section. En effet, la fissure traverse habituellement les soudures et se propage de proche en proche sur une très grande longueur, ce qui nécessite des réparations très onéreuses.

Dans le brevet britannique GB—A—1376731 (British Petroleum) il a déjà été proposée, pour la réalisation de canalisations métalliques, de raccorder des sections de tuyau métallique dont l'orientation cristalline est dans le sens longitudinal par l'intermédiaire de sections de tuyau métallique dont la direction de l'orientation cristalline forme un angle de 70 à 90% avec leur axe longitudinal afin d'éviter une propagation longitudinale d'éventuelles fissures.

La présente invention vise à fournir un procédé simple et efficace qui permet lors de la réalisation de canalisations par soudage bout à bout de sections en matière thermoplastique d'écarter également tout risque de propagation longitudinale d'une fissure accidentelle se produisant ultérieurement dans la paroi d'une section au-delà de cette section.

Elle concerne à cet effet un procédé pour la réalisation par soudage bout à bout de sections de tuyau dans lequel on intercale entre les sections successives des anneaux de diamètre sensiblement égal à celui des sections dans lequel les sections de tuyau et les anneaux sont réalisés en matière thermoplastique, et dans lequel les anneaux ont subi une orientation moléculaire circonférentielle dont le taux est supérieur au taux d'orientation circonférentielle dont le taux est supérieur au taux d'orientation moléculaire longitudinale des sections de manière à empêcher la propagation de fissures d'une section à une autre.

En effet, il a été constaté que les anneaux intercalés dans la canalisation ont pour effet de faire dévier dans un plan transversal toute fissure longitudinale qui les atteint et d'empêcher ainsi la propagation de cette fissure dans les autres sections de tuyau constituant la canalisation.

En règle générale, les sections de tuyau en matière thermoplastique utilisées pour la réalisation de canalisations présentent un taux d'orientation moléculaire longitudinale relativement faible qui dépasse rarement 10%. En conséquence, les anneaux intercalés dans la canalisation peuvent se révéler très efficaces pour le but visé dès que leur taux d'orientation moléculaire circonférentiel est d'au moins 10%. Par ailleurs, l'orientation radiale des anneaux entraîne ipso facto un affaiblissement de leur résistance mécanique dans le sens longitudinal. Il n'est dès lors pas souhaitable, notamment pour la réalisation de canalisations destinées au transport de fluides sous pression, d'utiliser des anneaux dont le taux d'orientation moléculaire radiale est très élevé et, plus particulièrement, supérieur à 100%.

Dans la pratique courant il est donc préférable d'utiliser des anneaux intercalaires dont le taux d'orientation moléculaire circonférentiel est compris entre 10 et 100%. Les meilleurs résultats ont été obtenus lorsque ce taux est compris entre 10 et 60%.

Selon un mode de réalisation préféré, les anneaux intercalaires orientés circonférentiellement sont réalisés en une matière thermoplastique identique ou tout au moins similaire à celle constituant les sections de tuyau à assembler. Il n'est toutefois nullement exclu d'utiliser des anneaux intercalaires orientés circonférentiellement réalisés en une matière thermoplastique différente de celle constituant les sections de tuyau à assembler pour autant, bien entendu, que ces deux matériaux soient suffisamment compatibles entre eux pour permettre leur soudage l'un à l'autre.

Afin de permettre un soudage bout à bout des sections de tuyau par l'intermédiaire des anneaux intercalaires orientés circonférentiellement, il convient évidemment que ces derniers présentent un diamètre sensiblement égal à celui des sections de tuyau à assembler. Le diamètre des anneaux intercalaires peut être légèrement supérieur à celui des sections de tuyau à assembler de façon à compenser le retrait circonférentiel éventuel des extrémités de ces anneaux lors du chauffage en vue du soudage.

Pour des raisons similaires, il est également préférable que les anneaux intercalaires orientés circonférentiellement présentent une épaisseur de paroi sensiblement égale à celle des sections de tuyau à assembler.

En ce qui concerne la longueur des anneaux intercalaires orientés circonférentiellement, il y a lieu de tenir compte des considérations suivantes. Les anneaux intercalaires du fait de leur orientation moléculaire possèdent une mémoire élastique qui se traduit par un retrait circonférentiel lorsqu'ils sont portés à une température proche ou supérieure à la température de transition vitreuse de leur matériau constitutif. Or pour réaliser le canalisation chacune des extrémités des anneaux intercalaires doit être amenée successivement à une température suffisante pour permettre le soudage avec une extrémité de section de tuyau c'est-à-dire à une température qui est nettement supérieure à la température de transition vitreuse de son matériau constitutif. Il convient dès lors que les anneaux intercalaires présentent une longueur suffisante pour que, lors du chauffage de leurs extrémités en vue du soudage, la partie centrale conserve une rigidité suffisante pour inhiber la tendance au retrait circonférentiel des extrémités. En général, on préfère dès lors que la longueur minimale des anneaux intercalaires orientés circonférentiellement soit au moins égale à leur épaisseur de paroi et de préférence au moins égale au double de cette épaisseur. La longueur maximale à donner aux anneaux intercalaires orientés circonférentiellement peut être quelconque et n'est, en fait, limitée que par des considérations d'ordre économique.

La distance séparant les anneaux intercalaires successifs placés dans la canalisation peut également être quelconque. Elle résulte en général d'un compromis qui tient compte du prix de revient des anneaux intercalaires orientés circonférentiellement et du prix de leur pose ainsi que du prix des sections de tuyau à réunir. Il est toutefois indiqué de réduire l'espacement entre les anneaux intercalaires orientés radialement dans les régions de la canalisation où, pour des motifs quelconques, les probabilités de formation et de propagation de fissures sont élevées.

La réalisation des anneaux intercalaires orientés circonférentiellement ne pose pas de problème particulier. Ceux-ci sont, en général, découpés dans une section de tuyau appropriée ayant subi un étirage circonférentiel après avoir été portée à la température d'orientation moléculaire de son matériau constitutif. Les caractéristiques de départ de la section de tuyau (diamètre, épaisseur de paroi) sont évidemment choisies de façon telle qu'après étirage circonférentiel selon un taux approprié, les anneaux découpés dans la section de tuyau, après traitement d'orientation circonférentielle, présentent un diamètre et une épaisseur de paroi qui correspondent sensiblement au diamètre et à l'épaisseur de paroi des sections de tuyau qu'ils sont destinés à réunir.

Le procédé selon l'invention peut être exploité pour la réalisation de canalisation à partir de sections de tuyau produites à partir d'une matière thermoplastique quelconque. Ainsi, à titre d'exemple, on peut utiliser les résines vinyliques telles que les résines à base de chlorure de vinyle, les résines polyoléfiniques telles que les résines à base d'éthylène ou de propylène, les résines acryliques telles que les résines à base de nitrile acrylique etc.

Le procédé selon l'invention peut être exploité pour la réalisation de canalisations de n'importe quel diamètre. De même, il est bien évident que l'invention peut s'appliquer mutatis mutandis à des tuyaux de section non circulaire ou des canalisations ouvertes.

Une application intefressante des canalisations réalisées selon l'invention est leur utilisation pour le transport souterrain à grande distance des saumures vers les installations de production de carbonate de soude ou de chlore.

Le procédé conforme à l'invention est par ailleurs explicité par les exemples ci-après. L'exemple 1, donné à titre comparatif, est exclu du cadre de l'invention et met en exergue l'intérêt du procédé de l'invention.

Exemple 1 (comparatif)

On réalise une canalisation de 10 mètres de longueur en assemblant par soudage bout à bout quatre sections de tuyau en polychlorure de vinyle de 2,5 m. Le diamètre externe des sections de tuyau est de 63 mm et leur épaisseur de paroi est de 4 mm. On amincit localement la paroi de la première section de tuyau de façon à créer une zone de faiblesse pouvant engendrer la formation d'une fissure.

L'assemblage des sections de tuyau est réalisé par soudage bout à bout par la technique de soudage au miroir chauffant en utilisant une soudeuse Peeters type PT8.

Les conditions de soudage sont les suivantes.

Température du miroir: 240°C
Temps de contact du miroir: 60 s
Pression de contact du miroir: 0,294 MPa
Temps de soudage: 180 s
Pression de soudage: 0,49 MPa.

La canalisation est ensuite mise sous pression interne croissante. Après un certain temps, on constate l'apparition d'une fissure dans la zone affaiblie de la première section de tuyau et la propagation longitudinale de cette fissure sur toute la longueur de la canalisation et ce même au travers des soudures.

Exemple 2

On évase radialement une section de tuyau en polychlorure de vinyl de 50 mm de diamètre externe et de 5 mm d'épaisseur de paroi de façon à porter son diamètre externe à 63 mm. L'évasement radial est effectué tandis que la section de tuyau est maintenue à une température uniforme de 100°C. Après refroidissement, la section de tuyau présente un diamètre externe de 63 mm et un épaisseur de paroi de 4 mm. Le taux d'évasement radial ou d'orientation moléculaire circonférentielle du tuyau est de

$$\frac{63-50\times100}{50}=26\%.$$

On découpe, dans cette section de tuyau, des anneaux d'une longueur de 50 mm.

On réalise ensuite une canalisation par assemblage bout à bout de quatre sections de tuyau en polychlorure de vinyl identiques à celles de l'exemple 1. L'assemblage est réalisé par soudage en interposant un anneau tel que décrit ci-dessus entre chaque section de tuyau. Les opérations de soudage sont effectuées dans les mêmes conditions qu'à l'exemple 1. Après avoir aminci localement la paroi de la première section de tuyau comme à l'exemple 1, on soumet la canalisation à une pression interne croissante.

Après un certain laps de temps, on constate de nouveau l'apparition d'une fissure dans la zone affaiblie de la première section de tuyau. On constate également la progression longitudinale de cette fissure dans la paroi de la première section de tuyau. Toutefois au niveau du premier anneau intercalaire orienté circonférentiellement, on remarque que la fissure se propage non plus longitudinalement mais circonférentiellement, c'est-à-dire sur le pourtour de l'anneau intercalaire. Il appert donc que la propagation longitudinale de la fissure est interrompue au niveau du premier anneau intercalaire et que les sections suivantes de tuyau restent intactes.

## Revendications

1. Procédé pour la réalisation de canalisations par soudage bout à bout de sections de tuyau orientées moléculairement dans le sens longitudinal dans lequel on intercale entre les sections successives des anneaux de diamètre sensiblement égal à celui des sections caractérisé en ce que les sections de tuyau et les anneaux sont réalisés en matière thermoplastique et en ce que les anneaux ont subi une orientation moléculaire circonférentielle dont le taux est supérieur au taux d'orientation moléculaire longitudinal des sections de manière à empêcher la propagation de fissures d'une section à une autre.

2. Procédé selon la revendication 1, caractérisé en ce que l'on utilise des anneaux dont le taux d'orientation moléculaire circonférentielle est compris entre 10 et 100%.

3. Procédé selon la revendication 1 ou 2, caractérisé en ce que l'on utilise des anneaux réalisés en une matière thermoplastique similaire à celle constituant les sections de tuyau.

4. Procédé selon l'une quelconque des revendications 1 à 3, caractérisé en ce que l'on utilise des anneaux ayant une épaisseur de paroi sensiblement égale à celle des sections de tuyau.

5. Procédé selon l'une quelconques des revendications 1 à 4, caractérisé en ce que l'on utilise des anneaux ayant une longueur au moins égale à leur épaisseur de paroi.

6. Procédé selon l'une quelconque des revendications 1 à 5, caractérisé en ce que l'on utilise des anneaux découpés dans une section de tuyau en matière thermoplastique ayant subi un étirage circonférentiel après avoir été portée à la température d'orientation moléculaire.

## Patentansprüche

1. Verfahren zur Herstellung von Rohrleitungen durch endseitiges Verschweißen von in Längsrichtung molekularorientierten Rohrabschnitten, wobei zwischen aufeinanderfolgende Rohrabschnitte Ringe eingesetzt werden, deren Durchmesser im wesentlichen gleich demjenigen der Abschnitte ist, dadurch gekennzeichnet, daß die Rohrabschnitte und die Ringe aus thermoplastischem Kunststoff hergestellt werden und daß die Ringe einer Molekularorientierung in Umfangsrichtung unterzogen worden sind, deren Ausmaß größer ist als das Ausmaß der längsgerichteten Molekularorientierung der Rohre, um eine Ausdehnung von Rissen von einem Abschnitt in einen anderen Abschnitt zu verhindern.

2. Verfahren nach Anspruch 1, dadurch gekennzeichnet, daß Ringe verwendet werden, deren Molekularorientierungsausmaß in Umfangsrichtung im Bereich zwischen 10 und 100% liegt.

3. Verfahren nach Anspruch 1 oder 2 dadurch gekennzeichnet, daß Ringe aus einem thermoplastischen Kuststoff verwendet werden, der gleich demjenigen ist, aus dem die Rohrabschnitte bestehen.

4. Verfahren nach einem der Ansprüche 1 bis 3, dadurch gekennzeichnet, daß Ringe mit einer Wandstärke im wesentlichen gleich derjenigen der Rohrabschnitte verwendet werden.

5. Verfahren nach einem der Ansprüche 1 bis 4, dadurch gekennzeichnet, daß Ringe mit einer Länge mindestens gleich ihrer Wandstärke verwendet werden.

6. Verfahren nach einem der Ansprüche 1 bis 5, dadurch gekennzeichnet, daß Ringe verwendet werden, die in einem Rohrabschnitt aus thermoplastischem Kunststoff abgeschnitten sind, der einer Reckung in Umfangsrichtung unterzogen worden ist, nachdem er auf Molekularorientierungstemperatur gebracht worden ist.

## Claims

1. Process for the production of pipelines by the butt welding of pipe sections molecularly oriented in the longitudinal direction, in which process rings having a diameter substantially equal to that of the sections are inserted between the successive sections, characterised in that the pipe sections and the rings are made of a thermoplastic material and in that the rings have undergone circumferential molecular orientation to a degree greater than the degree of longitudinal molecular orientation of the sections, so as to prevent the propagation of cracks from one section to another.

2. Process acccording to Claim 1, characterised in that rings having a degree of circumferential molecular orientation of between 10 and 100% are used.

3. Process according to Claim 1 or 2, characterised in that rings made of a thermoplastic material similar to that forming the pipe sections are used.

4. Process according to any one of Claims 1 to 3, characterised in that rings having a wall thickness substantially equal to that of the pipe sections are used.

5. Process according to any one of Claims 1 to 4, characterised in that rings having a length at least equal to their wall thickness are used.

6. Process according to any one of Claims 1 to 5, characterised in that the rings used are cut out of a pipe section made of a thermoplastic material, which has undergone circumferential stretching after having been brought to the molecular orientation temperature.